(19) Europäisches Patentamt
European Patent Office
Office européen des brevets

(11) Veröffentlichungsnummer: **0 356 862 A2**

# (12) EUROPÄISCHE PATENTANMELDUNG

(21) Anmeldenummer: **89115362.9**

(51) Int. Cl.$^5$: **C08G 18/61**

(22) Anmeldetag: **19.08.89**

(30) Priorität: **01.09.88 DE 3829583**

(43) Veröffentlichungstag der Anmeldung:
**07.03.90 Patentblatt 90/10**

(84) Benannte Vertragsstaaten:
**AT BE CH DE ES FR GB IT LI NL**

(71) Anmelder: **BAYER AG**

**D-5090 Leverkusen 1 Bayerwerk(DE)**

(72) Erfinder: **Schlak, Ottfried, Dr.**
**Kalkweg 2**
**D-5000 Köln 80(DE)**
Erfinder: **Wecker, Dieter, Dipl.-Ing.**
**Niessenstrasse 45**
**D-4150 Krefeld(DE)**

## (54) Verfahren zur Herstellung von Formkunststoffen auf Polyurethan-Basis und deren Verwendung als Schuhsohlen.

(57) Die vorliegende Erfindung betrifft chemisch eingebaute Polysiloxane aufweisende Formkunststoffe auf Polyurethan-Basis, die, hervorgerufen durch die eingebauten Polysiloxane einen verminderten Abrieb aufweisen, ein Verfahren zur Herstellung derartiger Formkunststoffe und deren Verwendung als Schuhsohlen.

EP 0 356 862 A2

# Verfahren zur Herstellung von Formkunststoffen auf Polyurethan-Basis und deren Verwendung als Schuhsohlen

Die Erfindung betrifft chemisch eingebaute Polysiloxane aufweisende Formkunststoffe auf Polyurethan-Basis, die, hervorgerufen durch die eingebauten Polysiloxane einen verminderten Abrieb aufweisen, ein Verfahren zur Herstellung derartiger Formkunststoffe und deren Verwendung als Schuhsohlen.

Gegebenenfalls zellförmige Formkunststoffe auf Polyurethan-Basis mit einer kompakten Oberfläche bzw. ihre Herstellung gehören zum längst bekannten Stand der Technik (vgl. z.B. US-PS 40 65 410, US-PS 42 18 543, US-PS 37 26 952, GB-PS 13 65 215, US-PS 40 33 912, US-PS 40 24 090, US-PS 40 58 492, US-PS 40 98 731, EP-A 17 928, EP-A 44 481, EP-A 69 286 oder DE-OS 31 33 859). Unter Formkunststoffen auf "Polyurethan-Basis" sind in diesem Zusammenhang nicht nur reine Polyurethan-Kunststoffe zu verstehen, wie sie durch Umsetzung von organischen Polyisocyanaten mit organischen Polyhydroxylverbindungen erhalten werden, sondern auch solche Kunststoffe, bei deren Herstellung ein Teil der Isocyanatgruppen unter Trimerisierung (Isocyanuratbildung) und/oder mit Aminogruppen aufweisenden Reaktionspartnern unter Harnstoffbildung abreagiert werden. Diese Formkunststoffe auf Polyurethan-Basis können in weicher, halbharter und harter Einstellung hergestellt werden. Insbesondere die elastomeren, gegebenenfalls zellförmigen "halbharten" Formkörper auf Polyurethan-Basis werden seit vielen Jahren u.a. zur Herstellung von Schuhsohlen verwendet. Ein Nachteil dieser Kunststoffe, besonders auf Basis von Polyetherpolyolen, ist der sehr hohe Abrieb. Es besteht somit ein Bedürfnis, gegebenenfalls zellförmige Formkunststoffe auf Polyurethan-Basis mit kompakter Außenhaut, insbesondere solche einer halbharten, elastomeren Einstellung, wie sie als Schuhsohlen verwendet werden, entsprechend auszurüsten, um den genannten Nachteil zu beseitigen. Es war daher die der Erfindung zugrundeliegende Aufgabe, neue Formkörper auf Polyurethan-Basis aufzufinden, die entsprechend ausgerüstet die Forderung nach einem verminderten Abrieb erfüllen, ohne daß die Ausrüstung die anwendungstechnischen Eigenschaften der Kunststoffe nachteilhaft beeinflußt.

Die Aufgabe konnte mit der Bereitstellung der nachstehend näher beschriebenen erfindungsgemäßen Polyurethan-Formkörper bzw. des Verfahrens zu ihrer Herstellung gelöst werden.

Gegenstand der Erfindung sind gegebenenfalls zellförmige Formkunststoffe auf Polyurethan-Basis mit einer kompakten Oberfläche, gekennzeichnet durch einen Gehalt an chemisch in das Polyurethan-Gerüst eingebauten Polysiloxanen von 0,1 bis 8,0 Gew.-%.

Gegenstand der Erfindung ist auch ein Verfahren zur Herstellung dieser Formkörper durch Umsetzung eines Reaktionsgemisches in geschlossenen Formen, bestehend aus

a) einer Polyisocyanat-Komponente,

b) organischen Verbindungen mit gegenüber Isocyanatgruppen reaktionsfähigen Gruppen des Molekulargewichtsbereichs 400 bis 20 000,

gegebenenfalls

c) im Sinne der Isocyanat-Additionsreaktion mindestens difunktionellen Verbindungen des Molekulargewichtsbereiches 18 bis 399,

und

d) den aus der Polyurethan-Chemie an sich bekannten Hilfs- und Zusatzmitteln,

dadurch gekennzeichnet, daß man als Teil der Aufbaukomponenten b) und/oder c) ein oder mehrere Polysiloxane mit mindestens zwei gegenüber Isocyanatgruppen reaktionsfähige Gruppen in Mengen von 0,1 bis 8,0 Gew.-%, vorzugsweise von 0,5 bis 4,0 Gew.-%, verwendet.

Gegenstand der Erfindung ist schließlich auch die Verwendung der erfindungsgemäßen Polyurethan-Formkörper als Schuhsohlen.

Ausgangsmaterialien a) für das erfindungsgemäße Verfahren sind beliebige organische Polyisocyanate, wie sie beispielsweise in der DE-PS 24 04 310, Kolonne 3, Zeile 39 bis Kolonne 4, Zeile 56 beispielhaft offenbart sind. Bevorzugt werden beim erfindungsgemäßen Verfahren organische Polyisocyanate mit ausschließlich aromatisch gebundenen Isocyanatgruppen einer (mittleren) NCO-Funktionalität von 2 bis 2,3 eingesetzt. Zu den besonders bevorzugten Polyisocyanaten gehören bei Raumtemperatur flüssige Polyisocyanate bzw. Polyisocyanatgemische der Diphenylmethan-Reihe, d.h. bei Raumtemperatur flüssige Gemische von 4,4′-Diisocyanatodiphenylmethan mit 2,4′-Diisocyanaten, bei Raumtemperatur flüssige, Carbodiimid-bzw. Uretonimin-modifizierte Derivate dieser Diisocyanate bzw. Polyisocyanatgemische, insbesondere solche der in DE-OS 26 24 526 beschriebenen Art, und bei Raumtemperatur flüssige Umsetzungsprodukte von 1 Mol 4,4′-Diisocyanatodiphenylmethan mit 0,05 bis 0,3 Mol eines oder mehrerer niedermolekularer Diole oder Triole, vorzugsweise Polypropylenglykole mit einem Molekulargewicht bis zu 700, wie sie beispielsweise gemäß DE-OS 16 18 380 zugänglich sind. Auch NCO-Semiprepolymere auf Basis von 4,4′-Diisocyanatodiphenylmethan oder den zuletztgenannten besonders bevorzugten Polyisocyanaten und Polyhydroxylverbindungen der nachstehend unter b) beispielhaft genannten Art können als Ausgangsmaterialien a) beim erfindungsgemäßen Verfahren eingesetzt werden. Unter "NCO-Semiprepolymeren" sind in diesem Zusammenhang Umsetzungsprodukte der genannten Einzelkomponenten in einem NCO/OH-Äquivalentverhältnis von 2,2:1 bis 20:1, vorzugsweise 3:1 bis 10:1 zu verstehen.

Bei der Ausgangskomponente b) handelt es sich um mindestens eine Verbindung mit mindestens zwei gegenüber Isocyanatgruppen reaktionsfähigen Wasserstoffatomen und einem, aus der Funktionalität und dem Gehalt an gegenüber Isocyanatgruppen reaktionsfähigen Gruppen berechenbaren (durchschnittlichen) Molekulargewicht von 400 bis 20 000, vorzugsweise 1 000 bis 7 000 und insbesondere 2 000 bis 6 000. Besonders bevorzugt werden als Ausgangskomponente b) di- und/oder trifunktionelle Polyetherpolyole eingesetzt. Diese Polyetherpolyole werden in bekannter Weise beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4′-Dihydroxydiphenylpropan, Anilin, Ethanolamin oder Ethylendiamin hergestellt. Auch Sucrosepolyether, wie sie z.B. in den DE-Auslegeschriften 11 76 358 und 10 64 938 beschrieben werden, sowie auf Formit oder Formose gestartete Polyether (DE-Offenlegungsschriften 26 39 083 bzw. 27 37 951), kommen erfindungsgemäß in Frage. Vielfach sind solche Polyether bevorzugt, die überwiegend (bis zu 90 Gew.-% bezogen auf alle vorhandenen OH-Gruppen im Polyether) primäre OH-Gruppen aufweisen. Als Ausgangskomponente b) kommen auch die sogenannten Aminopolyether oder Aminohydroxypolyether des obengenannten Molekulargewichtsbereichs in Betracht, deren endständige, gegenüber Isocyanatgruppen reaktionsfähige Gruppen zumindest zu 25, vorzugsweise zu 50, und insbesondere zu 80 bis 100 Äquivalent-% aus primären und/oder skundären, aromatisch oder aliphatisch gebundenen Aminogruppen und zum Rest aus primären und/oder sekundären, aliphatisch gebundenen Hydroxylgruppen bestehen.

In diesen Verbindungen können die die Aminogruppen tragenden endständigen Reste mit der Polyetherkette auch über Urethan- oder Estergruppen verknüpft sein. Die Herstellung dieser "Aminopolyether" erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-PS 634 741). US-PS 36 54 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 11 93 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 31 55 728, US-PS 32 36 895 und FR-PS 15 51 605 beschrieben. In der FR-PS 14 66 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente b) geeigneten Anthranilsäureester überführt werden, wie dies beispielsweise in DE-OS 20 19 432, DE-OS 26 19 840, US-PS 38 08 250, US-PS 39 75 428 oder US-PS 40 16 143 beschrieben sind. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 25 46 536 bzw. US-PS 38 65 971 höhermolekulare, endständige Aminogruppen aufweisende Verbindungen.

Ebenfalls einsetzbar sind andere Aminopolyether des obengenannten Molekulargewichtsbereichs, wie sie beispielsweise gemäß DE-OS 29 48 419 oder gemäß DE-OS 30 39 600 erhalten werden können.

Selbstverständlich können als erfindungsgemäße Ausgangskomponente b) auch beliebige Gemische der beispielhaft genannten Verbindungen mit gegenüber Isocyanatgruppen reaktionsfähigen Gruppen eingesetzt werden.

Die erfindungsgemäß als Ausgangskomponente b) in Betracht kommenden Verbindungen mit gegenüber Isocyanatgruppen reaktionsfähigen Gruppen sind nicht auf die oben beispielhaft erwähnten Verbindungen begrenzt.

So können beispielsweise beim erfindungsgemäßen Verfahren alle in der US-PS 42 18 543 beispielhaft beschriebenen Verbindungen mit gegenüber Isocyanatgruppen reaktionsfähigen Gruppen des Molekulargewichtsbereichs 400 bis 12 000 eingesetzt werden.

Bei den gegebenenfalls mitzuverwendenden Ausgangsverbindungen c) handelt es sich um beliebige, mindestens zwei primäre bzw. sekundäre Aminogruppen und/oder Hydroxylgruppen aufweisenden Kettenverlängerungsmittel bzw. Vernetzungsmittel des Molekulargewichtsbereichs 18 (Wasser) oder 32 (Hydrazin) bis 399. Vorzugsweise werden die entsprechenden difunktionellen Verbindungen eingesetzt.

Als Beispiele für derartige Verbindungen seien genannt: Hydrazin, Ethylendiamin, Hexamethylendiamin, 1-Amino-3,3,5-trimethyl-5-aminomethyl-cyclohexan (IPDA), N,N′-Dimethylhydrazin, Ethylenglykol, Propylenglykol-(1,2) und -(1,3), 1,4-Dihydroxybutan, 1,6-Dihydroxyhexan, Glycerin, Trimethylolpropan, Pentaerythrit, Chinit, Mannit, Diethylenglykol, Triethylenglykol, Tetraethylenglykol, Dipropylenglykol, Tripropylenglykol, Dibutylenglykol, Diethanolamin, Diisopropanolamin, 1,4-Diaminobenzol, 2,4-Diaminotoluol oder 4,4′-Diaminodiphenylmethan.

Zu den bevorzugten, beim erfindungsgemäßen Verfahren als Komponente c) einzusetzenden Verbindungen gehören diprimäre aromatische Diamine, deren Molekulargewicht innerhalb des obengenannten Bereichs liegt, und die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche bevorzugten bzw. besonders bevorzugten Diamine sind 2,4-Diaminomesitylen, 1,3,5-Triethyl-2,4-diaminobenzol, 1-Methyl-3,5-diethyl-2,4-diaminobenzol, 1-Methyl-3,5-diethyl-2,6-diaminobenzol, beliebige technische Gemische der letztgenannten beiden Diamine, 4,6-Dimethyl-2-ethyl-1,3-diaminobenzol, 3,4,3′,5′-Tetraethyl-4,4′-diaminoduphenylmethan, 3,5,3′,5′-Tetraisopropyl-4,4′-diaminodiphenylmethan, 3,5-Diethyl-3′-5′-diisopropyl-4,4′-diaminodiphenylmethan, 1-t-Butyl-3,5′-dimethyl-2,4-diaminobenzol, 1-t-Butyl-3,5-dimethyl-2,6-diaminobenzol oder beliebige technische Gemische der letztgenannten beiden Diamine.

Zu den bevorzugten erfindungsgemäß als Komponente c) einzusetzenden Verbindungen gehören außerdem aliphatische Diole des Molekulargewichtsbereichs 62 bis 200 wie z.B. Ethylenglykol, 1,2-Dihydroxypropan und Dihydroxybutan. Beliebige Gemische alkoholischer und/oder aminischer Aufbaukomponenten c) können selbstverständlich ebenfalls eingesetzt werden. Die Aufbaukomponente c) kommt beim erfindungsgemäßen Verfahren in Mengen von 0 bis 50, vorzugsweise von 10 bis 40 Gew.-%, bezogen auf Komponente b) zum Einsatz.

Beim erfindungsgemäßen Verfahren können als gegebenenfalls mitzuverwendende Hilfs- und Zusatzstoffe d) beispielsweise die folgenden zum Einsatz gelangen:

1. Treibmittel wie z.B.: Aceton, Ethylacetat und insbesondere halogensubstituierte Alkane wie Dichlormethan, Trichlormethan, Monofluortrichlormethan, Chlordifluormethan oder Dichlordifluormethan. Die Mitverwendung von Wasser ist prinzipiell möglich, jedoch weniger bevorzugt.

2. Katalysatoren für die Isocyanat-Polyadditions-Reaktion der an sich bekannten Art, wie sie beispielsweise in US-PS 40 65 410, Kolonne 5, Zeile 59 bis Kolonne 6, Zeile 30 beschrieben sind.

3. Oberflächenaktive Additive und sonstige Zusatzstoffe, wie sie beispielsweise in US-PS 40 65 410, Kolonne 6, Zeile 34 bis Kolonne 7, Zeile 2 beschrieben sind.

Erfindungswesentlich ist nun die (Mit-)Verwendung von Polysiloxanen, die mindestens zwei gegenüber Isocyanatgruppen reaktionsfähige Gruppen aufweisen. In Betracht kommen im wesentlichen lineare Polysiloxane der allgemeinen Formel

$HO(RO)_xRO[(R'_2SiO)_yR(OR)_xO]_zH$

in welcher

x eine ganze Zahl zwischen 0 und 50,

y eine ganze Zahl zwischen 5 und 500,

z eine ganze Zahl zwischen 1 und 10 bedeutet,

die Reste

R für $C_2$-$C_{20}$-Alkylen- bzw. verzweigte Alkylengruppen,

R′ für $C_1$-$C_{20}$-Alkylgruppen, gegebenenfalls verzweigt oder substituiert, oder Alkylgruppen, gegebenenfalls substituiert, stehen

und Polysiloxane der allgemeinen Formel

$$HO(RO)_xR\overset{R'}{\underset{R'}{Si}}O(R'_2SiO)_y\overset{R'}{\underset{R'}{Si}}RO(RO)_xH$$

in welcher
x eine ganze Zahl zwischen 0 und 50,
y eine ganze Zahl zwischen 5 und 500 bedeutet,
die Reste
R für $C_2$-$C_{20}$-Alkylen- bzw. verzweigte Alkylengruppen,
R′ für $C_1$-$C_{20}$-Alkylgruppen, gegebenenfalls verzweigt oder substituiert, oder Alkylgruppen, gegebenenfalls substituiert, stehen.

Polysiloxane der allgemeinen Formel (I) und (II) sind seit langem bekannt. Ihre Herstellung werden in W. Noll, "Chemie und Technologie der Silicone", 2. Auflage 1968, Verlag Chemie, Weinheim/Bergstraße, beschrieben.

Für das erfindungsgemäße Verfahren sind beispielsweise folgende organofunktionelle Polysiloxane geeignet:

I 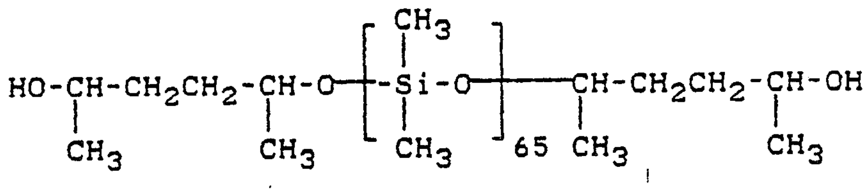

II 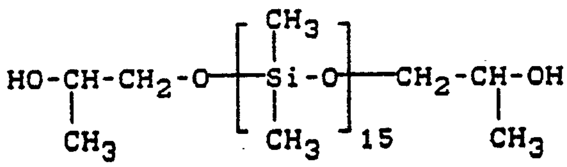

III 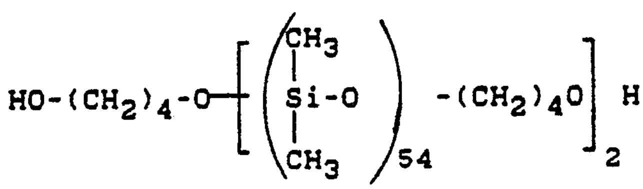

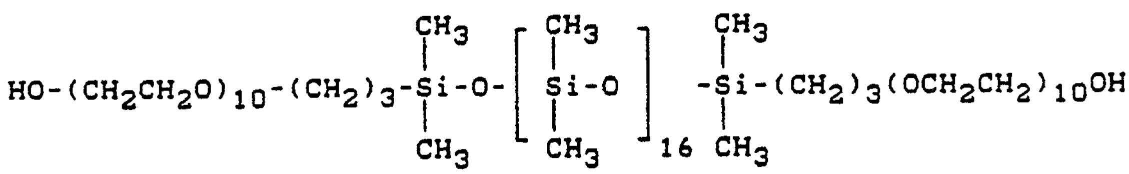

IV

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendung- und Wirkungsweise dieser Zusatzmittel sind im Kunststoff-Handbuch, Band VII, herausgegeben von Vieweg und Höchtlen, Carl-Hanser-Verlag, München 1966, z.B. auf Seiten 103 bis 113, beschrieben.

Grundsätzlich ist es auch möglich, bei der Durchführung des erfindungsgemäßen Verfahrens aus der Komponente a) und zumindest einem Teil der Komponente b) und/oder c) ein NCO-Prepolymer herzustellen und dieses in einer zweiten Reaktionsstufe mit der restlichen Menge der Komponenten b) bzw. c) zur Umsetzung zu bringen. Eine derartige zweistufige Arbeitsweise ist jedoch weniger bevorzugt.

Bei der Durchführung des erfindungsgemäßen Verfahrens wird die Menge der Komponente a) (Polyisocyanatkomponente) vorzugsweise so bemessen, daß im schäumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Bei dem erfindungsgemäßen Verfahren werden die Ausgangsmaterialien einstufig in geschlossenen

Formel, beispielsweise geschlossenen Metall- oder Kunststoff-Formen miteinander zur Umsetzung gebracht. Hierbei kommen im allgemeinen zwei Reaktionskomponenten zum Einsatz, wobei die Polyisocyanatkomponente a) die erste und die Komponente mit gegenüber Isocyanatgruppen reaktionsfähigen Gruppen, d.h. die Komponente b) gegebenenfalls in Abmischung mit der Komponente c) die zweite Reaktionskomponente darstellen. Die gegebenenfalls mitzuverwendenden Komponenten d) werden im allgemeinen der Komponente b) zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Komponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Die Menge des in die Form eingebrachten, gegebenenfalls schaumfähigen Gemisch wird im übrigen so bemessen, daß die Formkörper eine Dichte von 0,1 bis 1,4 g/cm³, vorzugsweise 0,1 bis 0,8 g/cm³, insbesondere 0,2 bis 0,6 g/cm³ aufweisen. Bei der Mitverwendung von mineralischen Füllstoffen können Formkörper mit einer über 1,0 g/cm³ liegenden Dichte resultieren. Die im allgemeinen eine homogene, weitgehend fehlerlose Oberfläche aufweisenden Formkörper können nach einer Formstandzeit von 5 bis 600, vorzugsweise 10 bis 360 Sekunden entformt werden. Als Ausgangstemperatur des in die Form eingebrachten Gemischs wird im allgemeinen eine Temperatur zwischen 10 bis 60 °C, vorzugsweise 20 bis 50 °C, gewählt. Die Temperatur der Form beträgt im allgemeinen 40 bis 140 °C, vorzugsweise 50 bis 100 °C und insbesondere 50 bis 70 °C.

Die Frage, ob beim erfindungsgemäßen Verfahren Schaumstoffe mit geschlossener Außenhaut, d.h. Formkörper einer unter 0,6 g/cm³ liegenden Rohdichte oder mikrozellulare Formkörper, d.h. solche einer über 0,6 g/cm³ liegenden Rohdichte resultieren, hängt von der Menge der mitverwendeten Treibmittel und der Menge des in die Form eingebrachten Reaktionsgemisches ab. Die Rohdichte der Formkörper kann somit durch geeignete Variation dieser Variablen eingestellt werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Das erfindungsgemäße Verfahren eignet sich bei geeigneter Wahl der Ausgangsverbindungen und deren Mengenverhältnissen zur Herstellung von harten mikrozellularen Formkörpern oder zur Herstellung von weichen bis harten Integralformstoffen.

Vorzugsweise werden Art und Mengenverhältnisse der Ausgangsverbindungen und die Menge des in die Form eingebrachten Reaktionsgemisches so gwählt, daß zellförmige Formkunststoffe auf Polyurethan-Basis mit einer kompakten Oberfläche einer Rohdichte von 0,2 bis 0,6 g/cm³ und einer Shore A-Härte gemäß DIN 53 505 von 40 bis 70 resultieren. Derartige Polyurethan-Kunststoffe stellen besonders wertvolle Rohmaterialien für Schuhsohlen dar. Die erfindungsgemäßen Schuhsohlen können beispielsweise durch Ausschneiden aus einem erfindungsgemäßen plattenförmigen Formkunststoff erhalten werden. Vorzugsweise werden die Schuhsohlen jedoch unter Verwendung von den Schuhsohlen entsprechenden Formen erhalten. Eine besonders bevorzugte Variante hierbei besteht darin, die Schuhsohle in an sich bekannter Weise direkt an das Schuhoberteil anzuschäumen. In einem solchen Falle stellt das Schuhoberteil die obere Begrenzung der Schuhsohlenform dar.

In den nachfolgenden Beispielen beziehen sich alle Prozentangaben auf Gewichtsprozente und alle Angaben in "Teilen" auf Gewichtsteile.

## Beispiele

### Beispiel 1

Rezeptur:

| Polyolkomponente: | |
|---|---|
| 74 Teile | eines Polyetherdiols der OH-Zahl 28, hergestellt durch Propoxylierung von Propylenglykol und anschließende Ethoxylierung des Propoxylierungsprodukts (PO:EO - Gewichtsverhältnis = 80:20): |
| 10 Teilen | eines Polyethertriols der OH-Zahl 35, hergestellt durch Propoxylierung von Trimethylolpropan und anschließende Ethoxylierung des Propoxylierungsprodukts (PO:EO - Gewichtsverhältnis = 87:13): |
| 7 Teile | Butandiol-1,4: |
| 0,5 Teile | Ethylenglykol: |
| 6 Teile | Trichlorfluormethan: |
| 0,5 Teile | Triethylendiamin: |
| 0,02 Teile | Dibutylzinndilaurat: |
| 0,1 Teile | Wasser: |
| 2 Teile | Trichlortrifluorethan |

| Polysiloxan Formel I | | | |
|---|---|---|---|
| | Bsp. 1a (z. Vgl.) | Bsp. 1b (erfindungsgemäß) | Bsp. 1c (erfindungsgemäß) |
| Polysiloxan I (Tle) | -- | 2 | 4 |

Isocyanat-Komponente:

41 Teile eines NCO-Semiprepolymers des NCO-Gehaltes 23 %, hergestellt durch Umsetzung von Diphenylmethan-4,4′-diisocyanat mit Tripropylenglykol.
Polyol- und Isocyanatkomponente werden bei Raumtemperatur intensiv maschinell miteinander verrührt, in ein Aluminiumklappwerkzeug mit einem Formnest der Maße 20 x 20 x 1 cm eingetragen (Formtemperatur 60° C) und nach 5 min entformt. Die Forminnerwände wurden zuvor mit einem handelsüblichen äußeren Trennmittel (P 180 der Firma Acmos, Bremen) beschichtet.

| | Daten: | | |
|---|---|---|---|
| | Ia | Ib | Ic |
| Dichte (DIN 53 420) | 500 | 500 | 500 kg/m³ |
| Härte Shore A (DIN 53 505) | 55 | 55 | 55 - |
| Abrieb (DIN 53 516) | 303 | 48 | 32 mg |

Beispiel 2

Rezeptur:

| Polyolkomponente: | |
|---|---|
| 79 Teile | eines Polyetherdiols der OH-Zahl 28, hergestellt durch Propoxylierung von Propylenglykol und anschließende Ethoxylierung des Propoxylierungsprodukts (PO:EO - Gewichtsverhältnis = 70:30): |
| 10 Teilen | eines Polyethertriols der OH-Zahl 35, hergestellt durch Propoxylierung von Trimethylolpropan und anschließende Ethoxylierung des Propoxylierungsprodukts (PO:EO - Gewichtsverhältnis = 87:13): |
| 8,5 Teile | Butandiol-1,4: |
| 0,5 Teile | Ethylenglykol: |
| 5,5 Teile | Trichlorfluormethan: |
| 0,5 Teile | Triethylendiamin: |
| 0,02 Teile | Dibutylzinndilaurat: |
| 0,18 Teile | Wasser: |
| 0,2 Teile | Triethanolamin |

| Polysiloxan Formel II | | | |
|---|---|---|---|
| | Bsp. 2a (z. Vgl.) | Bsp. 2b (erfindungsgemäß) | Bsp. 2c (erfindungsgemäß) |
| Polysiloxan II (Tle) | -- | 2 | 4 |

Isocyanat-Komponente: 45 Teile des Semiprepolymers wie Beispiel 1

| | Daten: | | |
|---|---|---|---|
| | Bsp. 2a (z.Vgl.) | Bsp. 2b (erfindungsgemäß) | Bsp. 2c (erfindungsgemäß) |
| Dichte (DIN 53 420) | 550 | 550 | 550 kg/m$^3$ |
| Härte Shore A (DIN 53 505) | 50 | 50 | 50 - |
| Abrieb (DIN 53 516) | 424 | 91 | 72 mg |

Beispiel 3

Rezeptur:

| Polyolkomponente: | |
|---|---|
| 70 Teile | eines Polyetherdiols der OH-Zahl 28, hergestellt durch Propoxylierung von Propylenglykol und anschließende Ethoxylierung des Propoxylierungsprodukts (PO:EO - Gewichtsverhältnis = 80:20): |
| 12 Teilen | eines Polyethertriols der OH-Zahl 35, hergestellt durch Propoxylierung von Trimethylolpropan und anschließende Ethoxylierung des Propoxylierungsprodukts (PO:EO - Gewichtsverhältnis = 87:13): |
| 10 Teile | Butandiol-1,4: |
| 0,5 Teile | Ethylenglykol: |
| 6 Teile | Trichlorfluormethan: |
| 0,5 Teile | Triethylendiamin: |
| 0,02 Teile | Dibutylzinndilaurat: |
| 0,15 Teile | Wasser: |

| Polysiloxan Formel III | | | |
|---|---|---|---|
| | Bsp. 3a (z. Vgl.) | Bsp. 3b (erfindungsgemäß) | Bsp. 3c (erfindungsgemäß) |
| Polysiloxan III (Tle) | - | 2 | 4 |

Isocyanat-Komponente: 56 Teile des NCO-Semiprepolymeren wie Beispiel 1

| | Daten: | | |
|---|---|---|---|
| | 3a | 3b | 3c |
| Dichte (DIN 53 420) | 530 | 530 | 530 kg/m³ |
| Härte Shore A (DIN 53 505) | 64 | 63 | 62 - |
| Abrieb (DIN 53 516) | 129 | 42 | 32 mg |

Beispiel 4

Rezeptur:

| Polyolkomponente: | |
|---|---|
| 62 Teile | eines Polyetherdiols der OH-Zahl 28, hergestellt durch Propoxylierung von Propylenglykol und anschließende Ethoxylierung des Propoxylierungsprodukts (PO:EO - Gewichtsverhältnis = 80:20): |
| 24 Teile | eines Polyethertriols der OH-Zahl 35, hergestellt durch Propoxylierung von Trimethylolpropan und anschließende Ethoxylierung des Propoxylierungsprodukts (PO:EO - Gewichtsverhältnis = 87:13): |
| 7 Teile | Butandiol-1,4: |
| 0,5 Teile | Ethylenglykol: |
| 6,5 Teile | Trichlorfluormethan: |
| 0,5 Teile | Triethylendiamin: |
| 0,02 Teile | Dibutylzinndilaurat: |
| 0,18 Teile | Wasser |

| Polysiloxan Formel IV | | | |
|---|---|---|---|
| | Bsp. 4a (z. Vgl.) | Bsp. 4b (erfindungsgemäß) | Bsp. 4c (erfindungsgemäß) |
| Polysiloxan IV (Tle) | - | 2 | 4 |

Isocyanat-Komponente: 43 Teile NCO-Semiprepolymere wie Beispiel 1

| | Daten: | | |
|---|---|---|---|
| | 4a | 4b | 4c |
| Dichte (DIN 53 420) | 530 | 530 | 530 kg/m³ |
| Härte Shore A (DIN 53 505) | 65 | 64 | 63 - |
| Abrieb (DIN 53 516) | 121 | 77 | 53 mg |

## Ansprüche

1. Gegebenenfalls zellförmige Formkunststoffe auf Polyurethan-Basis mit einer kompakten Oberfläche, gekennzeichnet durch einen Gehalt an chemisch in das Polyurethan-Gerüst eingebautem Polysiloxan von 0,1 bis 8,0 Gew.-%, bezogen auf die Gesamtmasse.

2. Gegebenenfalls zellförmige Formkunststoffe auf Polyurethan-Basis gemäß Anspruch 1, welche eine Dichte von 200 bis 800 kg/m³ aufweisen, gekennzeichnet durch einen Gehalt an chemisch in das Polyurethan-Gerüst eingebautem Polysiloxan von 0,5 bis 4,0 Gew.-%, bezogen auf die Gesamtmasse.

3. Zellförmige Formkunststoffe auf Polyurethan-Basis gemäß Anspruch 1 oder 2, dadurch gekennzeichnet, daß man Polysiloxane der allgemeinen Formel

$HO(RO)_xRO[(R'_2SiO)_yR(OR)_xO]_zH$

eingesetzt, in welcher

x eine ganze Zahl zwischen 0 und 50,

y eine ganze Zahl zwischen 5 und 500,

z eine ganze Zahl zwischen 1 und 10 bedeutet,

die Reste

R für $C_2$-$C_{20}$-Alkylen- bzw. verzweigte Alkylengruppen und

R′ für $C_1$-$C_{20}$-Alkylgruppen, gegebenenfalls verzweigt oder substituiert, oder Arylgruppen, gegebenenfalls substituiert, stehen.

4. Zellförmige Formkunststoffe auf Polyurethan-Basis gemäß Anspruch 1 oder 2, dadurch gekennzeichnet, daß man Polysiloxane der allgemeinen Formel

$$HO(RO)_xR\overset{R'}{\underset{R'}{Si}}O(R'_2SiO)_y\overset{R'}{\underset{R'}{Si}}RO(RO)_xH$$

eingesetzt, in welcher

x eine ganze Zahl zwischen 0 und 50,

y eine ganze Zahl zwischen 5 und 500 bedeutet,

die Reste

R für $C_2$-$C_{20}$-Alkylen- bzw. verzweigte Alkylengruppen,

R′ für $C_1$-$C_{20}$-Alkylgruppen, gegebenenfalls verzweigt oder substituiert, oder Arylgruppen, gegebenenfalls substituiert, stehen.

5. Verfahren zur Herstellung von Formkunststoffen auf Polyurethan-Basis gemäß Anspruch 1 bis 4 durch Umsetzung eines Reaktionsgemisches in geschlossenen Formen bestehend aus

a) einer Polyisocyanatkomponnte,

b) organischen Verbindungen mit gegenüber Isocyanatgruppen reaktionsfähigen Gruppen des Molekulargewichtsbereichs 32 bis 399,

und

c) im Sinne der Isocyanat-Additionsreaktion mindestens difunktionellen Verbindungen des Molekulargewichtsbereichs 18 bis 399,

und

d) den aus der Polyurethan-Chemie an sich bekannten Hilfs- und Zusatzmitteln,

dadurch gekennzeichnet, daß man als Teil der Aufbaukomponenten b) und/oder c) ein oder mehrere Polysiloxane mit mindestens zwei gegenüber Isocyanatgruppen reaktionsfähigen Gruppen in Mengen von 0,1 bis 8,0 Gew.-%, vorzugsweise von 0,5 bis 4,0 Gew.-%, einsetzt.

6. Verwendung der Formkunststoffe auf Polyurethan-Basis gemäß Anspruch 1 bis 4 als Schuhsohlen.